# EUROPÄISCHE PATENTSCHRIFT

(11) **EP 1 829 814 B1**
(45) Veröffentlichungstag und Bekanntmachung des Hinweises auf die Patenterteilung: **05.01.2011**
(21) Anmeldenummer: 07003279.2
(22) Anmeldetag: 16.02.2007
(51) Int. Cl.: B66F 9/075, B66F 9/24

(54) **Flurförderzeug mit Nutzungsdatenerfassung**
Industrial truck with data capture
Chariot de manutention muni d'un dispositif de saisie de données

(30) Priorität: 03.03.2006 DE 102006010291
(43) Veröffentlichungstag der Anmeldung: 05.09.2007
(73) Patentinhaber: Jungheinrich Aktiengesellschaft, 22047 Hamburg (DE)
(72) Erfinder: Baginski, Ralf, 21398 Neetze (DE); Mänken, Frank, 24558 Henstedt-Ulzburg (DE); von Werder, Martin, 22949 Ammersbek (DE)
(74) Vertreter: Hauck Patent- und Rechtsanwälte

(56) Entgegenhaltungen:
- DE-A1- 10 015 009
- DE-U1-202005 015 095
- US-A1- 2002 070 862

## Beschreibung

Die Erfindung betrifft ein Flurförderzeug mit einer Einrichtung zum Erfassen von Nutzungsdaten, genauer ein Flurförderzeug, bei dem die erfaßten Nutzungsdaten fortlaufend in einem Nutzungsprotokoll abgelegt werden.

Beim Einsatz von Flurförderzeugen ist es üblich, daß Kunden die für ihre innerbetrieblichen Transportaufgaben benötigten Fahrzeuge nicht mehr nur beim Hersteller kaufen, sondern diese lediglich für eine festgelegte Nutzungsdauer mieten. Häufig wird zusätzlich noch eine sogenannte Full-Service-Vereinbarung getroffen, mit der sich der Hersteller dazu verpflichtet, alle beim Betrieb der Fahrzeuge anfallenden Wartungs- und Reparaturarbeiten für eine festgelegte monatliche Kostenrate zu übernehmen.

Sowohl für den Kunden als auch für den Hersteller der Flurförderzeuge hängt der Erfolg dieses Geschäftsmodells davon ab, in welcher Weise und unter welchen Bedingungen die Fahrzeuge genutzt werden. Bei herkömmlichen Flurförderzeugen können nur grobe Abschätzungen zur tatsächlichen Nutzung getroffen werden, die sich zudem auf der Seite des Herstellers nur schwer überprüfen lassen.

Eine bedarfsgerechte Wartung stellt bei vermieteten Flurförderzeugen ebenfalls ein Problem dar. Sowohl vorzeitig als auch verspätet ausgeführte Wartungsarbeiten verursachen hohe Kosten. Die Wartungsintervalle müssen auf Grundlage von groben Schätzungen und Erfahrungswerten festgelegt werden.

Aus DE 115 009 A1 ist ein Anzeige-, Steuerungs- und Überwachungssystem für ein Flurförderzeug bekannt, das eine benutzerfreundliche Anzeige- und Bedienvorrichtung für ein Flurförderzeug beschreibt. Das Flurförderzeug ist mit einem Bordcomputer ausgestattet, der über einen CAN-Bus mit der Fahrzeugsteuerung und verschiedenen Sensoren des Fahrzeugs verbunden ist. Der Bordcomputer ist in der Lage, sämtliche Betriebsdaten des Flurförderzeugs aufzunehmen, zu speichern und auszuwerten.

Aus US 2002/0070862 A1 ist die Verwendung von RFID-Tags in Verbindung mit Flurförderzeugen bekannt. Es ist vorgesehen, in dem einem Objekt zugeordneten RFID-Tag auch die Bewegungshistorie oder das Gewicht eines Objekts zu speichern.

Davon ausgehend ist es die Aufgabe der Erfindung, ein Flurförderzeug bereitzustellen, das insbesondere bei Mieteinsätzen eine bedarfsgerechte Abrechnung der Nutzung des Flurförderzeugs erlaubt.

Diese Aufgabe wird gelöst durch die Merkmale des Anspruchs 1. Das erfindungsgemäße Flurförderzeug weist einen elektronischen Speicher und/oder eine Datenübertragungseinheit, eine Einrichtung zum Erfassen von Nutzungsdaten und eine Steuereinheit, die mit der Einrichtung zum Erfassen von Nutzungsdaten und dem Speicher und/oder der Datenübertragungseinheit verbunden ist, auf, wobei die Steuereinheit aus den erfaßten Nutzungsdaten fortlaufend ein Nutzungsprotokoll erstellt und in dem Speicher ablegt oder an die Datenübertragungseinheit übermittelt.

Die erfaßten Nutzungsdaten können dabei grundsätzlich sämtliche Betriebsdaten des Flurförderzeugs umfassen, insbesondere diejenigen, die einen Rückschluß auf die tatsächliche Nutzung und Beanspruchung des Flurförderzeugs zulassen. Eine mit der Einrichtung zum Erfassen von Nutzungsdaten verbundene Steuereinheit nimmt fortlaufend Einträge in ein Nutzungsprotokoll vor und legt dieses für eine weitere Auswertung in den Speicher ab oder übermittelt es an eine Datenübertragungseinheit.

Erfindungsgemäß ist eine Datenauswerteeinheit vorgesehen, die das Nutzungsprotokoll aus dem elektronischen Speicher ausliest und/oder von der Datenübertragungseinheit empfängt. Als Datenauswerteeinheit kommt insbesondere ein externer PC in Betracht, der vom Betreiber des Lagers zur Verwaltung des Fuhrparks genutzt wird. Je nach Ausführung des elektronischen Speichers ist es insbesondere vorgesehen, die Daten von einer Chipkarte auszulesen. Alternativ oder zusätzlich kann die Datenauswerteeinheit auch an ein Funknetzwerk angeschlossen sein, welches die von der Datenübertragungseinheit des Flurförderzeugs übermittelten Nutzungsprotokolle empfängt. Die Nutzungsprotokolle können von der Datenauswerteeinheit an den Hersteller bzw. Anbieter der Flurförderzeuge weitergeleitet werden.

Die Erfindung sieht vor, dass die Datenauswerteeinheit ein Nutzungsentgelt vorgibt. Auf diese Weise kann ein Bezahlungssystem für die Nutzung des Flurförderzeugs bereitgestellt werden, das die tatsächliche Beanspruchung und Nutzungsintensität des Flurförderzeugs auf Basis der erfaßten Nutzungsdaten individuell ermittelt. Das vorgegebene Nutzungsentgelt kann bereits die Form eines Zahlungsbetrags haben, es ist jedoch ebenso vorgesehen, zunächst einen Index für die Beanspruchung oder die Nutzungsintensität zu erstellen, der später in ein Entgelt umgerechnet wird. Auf diese Weise wird die Bezahlung für die Bereitstellung des Flurförderzeugs sowohl den Interessen des Lagerbetreibers, der die Dienstleistung in Anspruch nimmt, als auch des Anbieters bzw. Herstellers des Flurförderzeugs gerecht.

Gemäß einer Ausgestaltung ist vorgesehen, daß die Einrichtung zum Erfassen von Nutzungsdaten einen Geschwindigkeitssensor zur Messung der Geschwindigkeit des Flurförderzeugs umfaßt. Es ist bekannt, daß viele Komponenten eines Flurförderzeugs bei höherer Fahrgeschwindigkeit stärker beansprucht werden. Die Aufnahme der Geschwindigkeitsdaten in das Nutzungsprotokoll ermöglicht eine detaillierte entsprechende Auswertung.

Weiter ist vorgesehen, daß die Einrichtung zum Erfassen von Nutzungsdaten einen Beschleunigungssensor zur Messung der Beschleunigung des Flurförderzeugs umfaßt. Starkes Beschleunigen, d.h. rasantes Anfahren, plötzliches Abbremsen oder schnelle Kurvenfahrten führen ebenfalls zu einer erhöhten Beanspruchung des Flurförderzeugs, die zweckmäßigerweise in das Nutzungsprotokoll aufgenommen wird. Bevorzugt wird der Beschleunigungssensor auch zum Erfassen von Erschütterungen des Flurförderzeugs genutzt. Derartige Erschütterungen treten insbesondere in Folge von Bodenunebenheiten, insbesondere Schlaglöchern, auf. Die durch das Fahren über diese Bodenunebenheiten ausgelösten Erschütterungen tragen ebenfalls zu einer erhöhten Belastung des Flurförderzeugs bei. Das gleiche gilt auch für Erschütterungen, die durch Kollisionen mit anderen Fahrzeugen oder Gegenständen verursacht werden.

Gemäß einer Ausgestaltung beinhalten die Nutzungsdaten die von dem Flurförderzeug zurückgelegte Strecke. Die zurückgelegte Strecke kann im einfachsten Fall durch Zählen der Umdrehungen eines Rads des Flurförderzeugs ermittelt werden. Alternativ ist es auch möglich, die Signale eines Geschwindigkeits- oder Beschleunigungssensors auszuwerten.

In einer bevorzugten Ausgestaltung der Erfindung weist die Einrichtung zum Erfassen von Nutzungsdaten einen Lastsensor zur Bestimmung des Gewichts einer Last auf. Ein derartiger Lastsensor kann in das Lasthaltemittel integriert sein, oder das Gewicht einer Last aus einem Öldruck innerhalb der Hydraulik ermitteln. Bevorzugt wird nicht nur das Gewicht einer Last erfaßt, sondern die Einrichtung zum Erfassen von Nutzungsdaten weist zusätzlich oder unabhängig davon eine Vorrichtung zum Messen der Hubhöhe einer Last auf. Gegebenenfalls kann aus dem Gewicht und der Hubhöhe einer Last die von dem Hubsystem des Flurförderzeugs verrichtete Arbeit bestimmt werden.

Gemäß einer Ausgestaltung umfaßt die Einrichtung zum Erfassen von Nutzungsdaten eine Vorrichtung zur Messung von mindestens einem Kennwert des hydraulischen Systems des Flurförderzeugs. In Betracht kommt hier insbesondere der Öldruck, die Menge des gepumpten Öls sowie die Leistungsaufnahme eines Antriebsmotors des hydraulischen Systems. Sämtliche genannten Kennwerte stehen in Verbindung mit der Beanspruchung des Flurförderzeugs. Durch Meßwertnahme am hydraulischen System selbst sind über die Hubfunktion hinaus auch sämtliche anderen hydraulisch betriebenen Systeme, beispielsweise eine hydraulische Lenkung, in die Nutzungserfassung einbezogen.

In einer weiteren Ausgestaltung ist vorgesehen, daß die Einrichtung zum Erfassen von Nutzungsdaten einen Sensor im Fahrersitz zur Erkennung der Anwesenheit eines Fahrers umfaßt. Die entsprechenden Nutzungsdaten geben Aufschluß über die tatsächliche Betriebszeit des Flurförderzeugs.

Bevorzugt ist die Einrichtung zum Erfassen von Nutzungsdaten zur Erfassung von Steuerdaten mit der Fahrzeugsteuerung verbunden. Auf diese Weise können relevante Daten aus der Fahrzeugsteuerung in das Nutzungsprotokoll aufgenommen werden. Zu den relevanten Daten zählen beispielsweise Lenkwinkel, Hub- oder Senkbefehle, Stellungen des Gaspedals, Drehzahlen von Motoren, Bremseingriffe oder eine Umkehr der Fahrrichtung.

Gemäß einer Ausgestaltung umfaßt die Einrichtung zum Erfassen von Nutzungsdaten eine Sende- und Empfangseinheit zum Auslesen von RFID-Transpondem. RFID steht für Radio Frequency Identification und wird zur Erfassung des Codes bzw. der gespeicherten Daten eines entsprechenden RFID-Tags eingesetzt. Nach der Erfindung ist vorgesehen, derartige RFID-Tags an den zu transportierenden Lasten, an bestimmten Lagerpositionen und/oder an bestimmten Wegpunkten in einer Lagerhalle anzuordnen. Es wird dadurch möglich, nutzungsrelevante Daten, wie z.B. die zwischen unterschiedlichen Wegpunkten zurückgelegte Strecke, Eigenschaften der transportierten Waren, wie z.B. das Gewicht oder ein bestimmter Verpackungstyp oder auch die mit dem Flurförderzeug abgefahrenen Lagerpositionen genau und mit großer Sicherheit zu erfassen. Es kann dadurch ein sehr individuelles Nutzungsprotokoll erstellt werden. Weiterhin ist vorgesehen, auch den Fahrer mit einem entsprechenden RFID-Tag auszurüsten, der von der Sende- und Empfangseinheit ausgelesen werden kann. Dadurch besteht die Möglichkeit, in dem Nutzungsprotokoll auch Informationen über den das Flurförderzeug tatsächlich führenden Fahrer zu speichern.

Grundsätzlich können die RFID-Transponder in einem beliebigen verfügbaren Frequenzband arbeiten, bevorzugt wird jedoch das UHF-Band. UHF steht für Ultra High Frequency und stellt sicher, daß die RFID-Transponder auch in einem größeren Abstand von der Sende- und Empfangseinheit noch fehlerfrei ausgelesen werden können.

Gemäß einer Ausgestaltung enthält das Nutzungsprotokoll eine konsolidierte Fassung der Nutzungsdaten. Grundsätzlich ist es möglich, sämtliche

Nutzungsdaten zu protokollieren. Hierzu bietet sich beispielsweise ein fester Zeittakt an, in dem die Steuereinheit die erfaßten Nutzungsdaten ausliest und in das Nutzungsprotokoll aufnimmt. Vorteilhafter ist jedoch eine konsolidierte, d.h. selektive oder zusammenfassende Speicherung der Nutzungsdaten. So kann die Steuereinheit beispielsweise die zurückgelegte Strecke in einem anderen Zeittakt in das Nutzungsprotokoll aufnehmen als andere Nutzungsdaten. Es kann so ein für die weitere Verarbeitung optimiertes Nutzungsprotokoll erstellt werden. Insbesondere ist es möglich, die Länge des Nutzungsprotokolls an den zur Verfügung stehenden Speicherplatz anzupassen. Es ist auch möglich, daß das Nutzungsprotokoll nur einige wenige Kennzahlen enthält, die beispielsweise die erfaßten Nutzungsdaten eines ganzen Tages oder einer Schicht zusammenfassen. Die Steuereinheit kann die Nutzungsdaten dabei derart zusammenfassen, daß diese wenigen Kennzahlen zuverlässig über die tatsächliche Beanspruchung des Flurförderzeugs in dem jeweiligen Zeitraum Aufschluß geben.

In einer bevorzugten Ausgestaltung wird als elektronischer Speicher eine Festplatte, ein Speicherchip oder eine Chipkarte verwendet. Grundsätzlich kommt jedes Speichermedium in Betracht, das die erforderliche Datenmenge speichern kann. Die Verwendung einer Chipkarte bietet den Vorteil, daß die Erfassung eines Nutzungsprotokolls mit weiteren Funktionalitäten der Chipkarte kombiniert werden kann, beispielsweise mit einer Nutzungsberechtigung für den Fahrer, der sich mit Hilfe der Chipkarte ausweist. Außerdem können mit Hilfe einer Chipkarte die Nutzungsdaten in besonders einfacher Weise an ein Auswertesystem weitergegeben werden.

Eine weitere Ausgestaltung der Erfindung sieht vor, den elektronischen Speicher in ein Funknetzwerk einzubinden. Auf diese Weise können die Nutzungsprotokolle drahtlos in den Speicher geschrieben bzw. aus diesem gelesen werden. Diese Ausgestaltung bietet sich insbesondere in Verbindung mit einer Chipkarte an, die z.B. selbst als RFID-Karte ausgeführt sein kann. Durch die drahtlose Datenübertragung wird erreicht, daß die Chipkarte nicht am Flurförderzeug eingesteckt werden muß, sondern beispielsweise vom Fahrer am Körper getragen werden kann. Die Chipkarte kann dadurch besonders vorteilhaft gleichzeitig als Speicher für die Nutzungsprotokolle und für weitere Funktionen, wie beispielsweise eine Zugangs-berechtigung zum Fahrzeug oder zu einer Lagerhalle, genutzt werden. Zur Kommunikation mit der Chipkarte kann auf Seiten des Flurförderzeugs eine separate Sende- und Empfangseinheit vorgesehen werden. Vorteilhaft kann auch die Sende- und Empfangseinheit, die zum Auslesen der an den Produkten oder an bestimmten Punkten innerhalb des Lagers angeordneten RFID-Tags vorgesehen ist, Anwendung finden.

Gemäß einer bevorzugten Ausgestaltung gibt die Datenauswerteeinheit die Fälligkeit von Wartungsarbeiten vor. Hierzu werden ausgehend von den protokollierten Nutzungsdaten Analysen der Beanspruchung des Flurförderzeugs, gegebenenfalls auch einzelner Komponenten des Flurförderzeugs, erstellt. Diese Analysen erlauben eine bedarfsgerechte Vorhersage des Umfangs und der Fälligkeit von Wartungsarbeiten. Die bedarfsgerechte Festlegung der Wartungsintervalle kann die Kosten der Wartungsarbeiten reduzieren und insbesondere zusätzliche Aufwendungen, die eine verspätete Wartung nach sich ziehen kann, vermeiden.

Nachfolgend wird die Erfindung anhand eines Ausführungsbeispiels und einer Skizze näher erläutert.

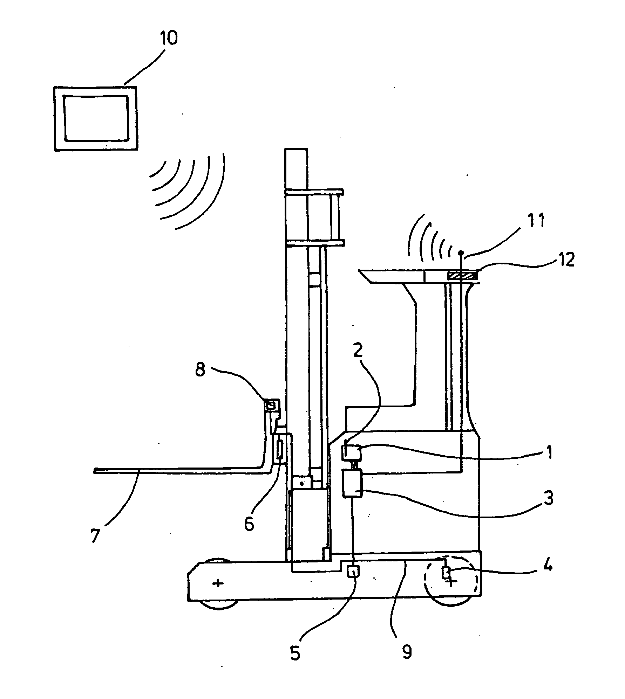

Die einzige Figur zeigt ein erfindungsgemäßes Flurförderzeug.

Das Flurförderzeug weist einen elektronischen Speicher 1 auf, in den eine Chipkarte 2 eingesteckt ist. Auf der Chipkarte 2 werden die Nutzungsprotokolle abgespeichert. Mit dem elektronischen Speicher 1 verbunden ist eine Steuereinheit 3. Alternativ kann die Chipkarte auch als RFID-Karte ausgeführt sein und drahtlos mit der Steuereinheit 3 über eine geeignete Sende- und Empfangseinrichtung in Verbindung stehen.

Die Steuereinheit 3 verarbeitet die von einer Einrichtung zum Erfassen bereitgestellten Nutzungsdaten und erstellt aus der Vielzahl der Nutzungsdaten eine Auswahl relevanter Einträge für das Nutzungsprotokoll zur Speicherung auf der Chipkarte 2 und/oder zur Übertragung an eine Datenauswerteeinheit 10, z.B. per Funkprotokoll (WLAN, GSM, etc.). Für die Übertragung an eine Datenaus-werteeinheit 10 ist eine Antenne 11 am Flurförderzeug vorgesehen. Die Antenne 11 ist Teil einer Datenübertragungseinheit 12, die mit der Steuereinheit 3 verbunden ist.

Die Einrichtung zum Erfassen der Nutzungsdaten beinhaltet im vorliegenden Ausführungsbeispiel einen Geschwindigkeitssensor 4, der in der Nähe der Achse eines Rades des Flurförderzeugs angeordnet ist und fortlaufend Informationen über die Fahrgeschwindigkeit des Flurförderzeugs erfaßt und an die Steuereinheit 3 weiterleitet. Dazu ist er über eine Leitung 9 mit der Steuereinheit 3 verbunden.

Ebenfalls mit der Steuereinheit 3 verbunden ist ein Beschleunigungssensor 5, der fest mit dem Flurförderzeug verbunden ist. Der Beschleunigungssensor 5 erfaßt die Beschleunigung des Flurförderzeugs in Fahrtrichtung beim Beschleunigen und Abbremsen sowie eine Querbeschleunigung während der Kurvenfahrten, zusätzlich auch Erschütterungen bei Kollisionen mit anderen Fahrzeugen oder Gegenständen oder infolge von Bodenunebenheiten. Die Beschleunigungsdaten werden ebenfalls über eine Leitung an die Steuereinheit 3 übermittelt.

Im Bereich des Lasthaltemittels 7 ist ein Lastsensor 6 angeordnet. Der Lastsensor 6 bestimmt fortlaufend das Gewicht einer mit dem Lasthaltemittel 7 gehobenen Last und stellt diese Nutzungsdaten ebenfalls der Steuereinheit 3 zur Verfügung.

In der Nähe der zu hebenden Lasten ist weiterhin eine Sende- und Empfangseinheit 8 zum Auslesen von RFID-Transpondern angeordnet. Die Sende- und Empfangseinheit 8 liest Produktcodes von RFID-Tags, die an den beförderten Lasten angeordnet sind, aus. Zusätzlich zu den Produktcodes können diese RFID-Tags auch weitere Informationen bereitstellen, z.B. das Gewicht der Ladung oder sonstige Produkteigenschaften. Weitere Daten können von zusätzlichen RFID-Tags, die an bestimmten Wegpunkten in der Lagerhalle angeordnet sind, ausgelesen werden. Die ausgelesenen Daten werden von der Sende- und Empfangseinheit an die Steuereinheit 3 übermittelt und führen zu entsprechenden Einträgen in das Nutzungsprotokoll auf der Chipkarte 2. Bei der späteren Auswertung des Nutzungsprotokolls werden aus den erfaßten Nutzungsdaten einschließlich der empfangenen Daten der RFID-Tags Angaben zur tatsächlichen Beanspruchung und Nutzungsintensität des Flurförderzeugs berechnet. Auf diese Weise werden genaue Informationen über die tatsächliche Nutzung des Flurförderzeugs gewonnen, die für eine bedarfsgerechte Wartung und eine der tatsächlichen Beanspruchung Rechnung tragende Festlegung einer Bezahlung herangezogen werden.

Insbesondere für eine nutzungsabhängige Bezahlung der Leistungen eines Flurförderzeugs ist es vorgesehen, dass das Flurförderzeug durch eine installierte Schreib-Lese-Einheit in der Lage ist, bereits während des Transportprozesses, bei dem sich das Transportgut auf einer Lastgabel befindet, genaue Daten zu Art und Beschaffenheit des Transportgutes zu erfassen. Dazu ist es erforderlich, dass diese Daten in einem RFID-Transponder abgelegt sind, der sich direkt am Transportgut bzw. im Ladungsträger befindet. Abhängig von den gespeicherten Informationen kann beispielsweise das Gewicht und das Volumen des Transportgutes an das Flurförderzeug übermittelt werden. Aber auch andere übergeordnete Daten, wie beispielsweise Eigentümer, Empfänger, Besitzer oder Hersteller der Ware können empfangen und gespeichert werden. Diese Daten ermöglichen es, für jedes Transportgut einzeln die Nutzung des Flurförderzeugs zu erfassen und so spezifisch für das Transportgut die Nutzung des Flurförderzeugs zu protokollieren und auch abzurechnen.

Ebenfalls über RFID-Transponder lassen sich Bewegungsdaten des Flurförderzeugs im Lagerbereich ermitteln. Dazu werden sowohl am Aufnahmeort der Ladung, beispielsweise im Wareneingang, als auch am Ablageplatz, also beispielsweise dem Regalplatz, entsprechende Transponder mit den erforderlichen Ortsinformationen bereitgestellt und vom Flurförderzeug ausgelesen.

Aus der Kombination der zurückgelegten Wegstrecken mit den am Ladegut gewonnenen übergeordneten Daten lassen sich somit nutzungsabhängige Transportentgelte ermitteln, die direkt in einem entsprechenden Datenverarbeitungsmodul im Flurförderzeug generiert und abgespeichert werden. Eine Übermittlung an übergeordnete Datenverarbeitungssysteme für das Unternehmen kann dann beispielsweise über Funkkommunikation, wie beispielsweise WLAN erfolgen.

Die nutzungsabhängigen Transportentgelte lassen sich auf herkömmliche Art und Weise, also beispielsweise durch die Nutzung eines Betriebsdatenerfassungsgerätes, nur sehr unzureichend erfassen, da zwar Betriebsdaten des Flurförderzeugs vorliegen, genaue Informationen zu Art und Beschaffenheit des Ladegutes aber fehlen.

Bei einer bevorzugten Anwendung der Erfindung betreibt beispielsweise ein externer Logistikdienstleister innerbetriebliche Transporte im Auftrag seines Kunden. Abgerechnet werden diese Dienstleistungen direkt mittels der beim Transportprozess gewonnenen Daten. Dies könnte beispielsweise sein: Abholort, Zielort, Gewicht und Volumen des Ladegutes, zugeordnete Kostenstellen. Die für jeden Transportprozess eines Transportguts anfallenden, nutzungsabhängigen Kosten werden auf entsprechende Konten gebucht, die auf einfache Weise sehr zeitnah oder in regelmäßigen Abständen abgerechnet werden können.

In einer weiteren möglichen Anwendung der Erfindung werden die ermittelten, nutzungsabhängigen Transportentgelte nach Abschluß eines Transportauftrages vom Flurförderzeug direkt auf den am Ladegut befindlichen RFID-Transponder geschrieben. Es entsteht dort eine Art Transportlebenslauf mit den jeweils bei den einzelnen Prozessen angefallenen Kosten. Diese werden beispielsweise bei Übergabe der Ware in Verantwortung eines anderen Unternehmens ermittelt und entsprechend abgerechnet.

## Patentansprüche

1. Flurförderzeug, mit
- einem elektronischen Speicher (1) und/oder einer Datenübertragungseinheit (12),
- einer Einrichtung zum Erfassen von Nutzungsdaten,
- einer Steuereinheit (3), die mit der Einrichtung zum Erfassen von Nutzungsdaten und dem Speicher (1) und/oder der Datenübertragungseinheit (12) verbunden istwobei die Steuereinheit (3) aus den erfaßten Nutzungsdaten fortlaufend ein Nutzungsprotokoll erstellt und in dem Speicher (1) ablegt oder an die Datenübertragungseinheit (12) übermittelt, **dadurch gekennzeichnet, dass** eine Datenauswerteeinheit (10) vorgesehen ist, die das Nutzungsprotokoll aus dem elektronischen Speicher (1) ausliest und/oder von der Datenübertragungseinheit (12) empfängt und ein Nutzungsentgelt vorgibt.

2. Flurförderzeug nach Anspruch 1, **dadurch gekennzeichnet, daß** die Einrichtung zum Erfassen von Nutzungsdaten einen Geschwindigkeitssensor (4) zur Messung der Geschwindigkeit und/oder einen Beschleunigungssensor (5) zur Messung der Beschleunigung des Flurförderzeugs umfasst.

3. Flurförderzeug nach Anspruch 1 oder 2, **dadurch gekennzeichnet, daß** die Nutzungsdaten die von dem Flurförderzeug zurückgelegte Strecke beinhalten.

4. Flurförderzeug nach einem der Ansprüche 1 bis 3, **dadurch gekennzeichnet, daß** die Einrichtung zum Erfassen von Nutzungsdaten einen Lastsensor (6) zur Bestimmung des Gewichts einer Last umfaßt.

5. Flurförderzeug nach einem der Ansprüche 1 bis 4, **dadurch gekennzeichnet, daß** die Einrichtung zum Erfassen von Nutzungsdaten eine Vorrichtung zum Messen der Hubhöhe einer Last umfaßt.

6. Flurförderzeug nach einem der Ansprüche 1 bis 5, **dadurch gekennzeichnet, daß** die Einrichtung zum Erfassen von Nutzungsdaten eine Vorrichtung zur Messung von mindestens einem Kennwert des hydraulischen Systems des Flurförderzeugs umfaßt.

7. Flurförderzeug nach einem der Ansprüche 1 bis 6, **dadurch gekennzeichnet, daß** die Einrichtung zum Erfassen von Nutzungsdaten einen Sensor im Fahrersitz zur Erkennung der Anwesenheit eines Fahrers umfaßt.

8. Flurförderzeug nach einem der Ansprüche 1 bis 7, **dadurch gekennzeichnet, daß** die Einrichtung zum Erfassen von Nutzungsdaten mit der Fahrzeugsteuerung verbunden ist zur Erfassung von Steuerdaten.

9. Flurförderzeug nach einem der Ansprüche 1 bis 8, **dadurch gekennzeichnet, daß** die Einrichtung zum Erfassen von Nutzungsdaten eine Sende- und Empfangseinheit (8) zum Auslesen von RFID-Transpondern umfaßt.

10. Flurförderzeug nach einem der Ansprüche 1 bis 9, **dadurch gekennzeichnet, daß** das Nutzungsprotokoll eine konsolidierte Fassung der Nutzungsdaten enthält.

11. Flurförderzeug nach Anspruch 1, **dadurch gekennzeichnet, daß** die Datenauswerteeinheit (10) die Fälligkeit von Wartungsarbeiten vorgibt.

12. Flurförderzeug nach einem der Ansprüche 1 bis 11, **dadurch gekennzeichnet, daß** die Einrichtung zum Erfassen von Nutzungsdaten Daten von einem aufgenommenen Ladegut und/oder Ladungsträger erfasst.

13. Flurförderzeug nach Anspruch 12, **dadurch gekennzeichnet, daß** die Einrichtung zum Erfassen von Nutzungsdaten mindestens eine der folgenden Informationen erfasst: Eigentümer, Empfänger, Besitzer und Hersteller der Ware.

14. Flurförderzeug nach Anspruch 12 oder 13, **dadurch gekennzeichnet, daß** die Einrichtung zum Erfassen von Nutzungsdaten die Bewegungsdaten eines Ladegutes und/oder eines Ladungsträges erfasst.

## Claims

1. An industrial truck with
- an electronic memory (1) and/or a data transfer unit (12),
- an equipment for acquiring utilization data,
- a control unit (3), which is connected with the equipment for acquiring utilization data and the memory (1) and/or the data transfer unit (12), wherein the control unit (3) continuously generates an utilization protocol from the acquired utilization data and files it in the memory (1) or transmits it to the data transfer unit (12), **characterised in that** a data analysing unit (10) is provided, which reads out the utilization protocol from the electronic memory (1) and/or receives it from the data transfer unit (12) and predetermines an utilization fee.

2. An industrial truck according to claim 1, **characterised in that** the equipment for acquiring utilization data comprises a speed sensor (4) for measuring the speed of the industrial truck and/or an acceleration sensor (5) for measuring the acceleration of the industrial truck.

3. An industrial truck according to claim 1 or 2, **characterised in that** the utilization data include the distance travelled by the industrial truck.

4. An industrial truck according to any one of claims 1 to 3, **characterised in that** the equipment for acquiring utilization data comprises a load sensor for determining the weight of a load.

5. An industrial truck according to any one of claims 1 to 4, **characterised in that** the equipment for acquiring utilization data comprises a device for measuring the lifting height of a load.

6. An industrial truck according to any one of claims 1 to 5, **characterised in that** the equipment for acquiring utilization data comprises a device for measuring at least one parameter of the hydraulic system of the industrial truck.

7. An industrial truck according to any one of claims 1 to 6, **characterised in that** equipment for acquiring utilization data comprises a sensor in the driver's seat for recognising the presence of a driver.

8. An industrial truck according to any one of claims 1 to 7, **characterised in that** the equipment for acquiring utilization data is connected to the vehicle control for acquiring control data.

9. An industrial truck according to any one of claims 1 to 8, **characterised in that** the equipment for acquiring utilization data comprises a sending and receiving unit (8) for reading out RFID-transponders.

10. An industrial truck according to any one of claims 1 to 9, **characterised in that** the utilization protocol contains a consolidated version of the utilization data.

11. An industrial truck according to claim 1, **characterised in that** the data analysing unit (10) announces the dueness of maintenance operations.

12. An industrial truck according to any one of claims 1 to 11, **characterised in that** the equipment for acquiring utilization data acquires data from a picked-up load good and/or load support.

13. An industrial truck according to claim 12, **characterised in that** the equipment for acquiring utilization data acquires at least one of the following information: owner, consignee, proprietor and manufacturer of the ware.

14. An industrial truck according to claim 12 or 13, **characterised in that** the equipment for acquiring utilization data acquires the movement data of a load good and/or a load support.

## Revendications

1. Chariot de manutention, avec
• une mémoire électronique (1) et/ou une unité de transmission de données (12),
• un dispositif de saisie de données d'utilisation,
• une unité de commande (3), qui est reliée au dispositif de saisie de données d'utilisation et à la mémoire (1) et/ou à l'unité de transmission de données (12), l'unité de commande (3) créant continûment un protocole d'utilisation à partir des données d'utilisation saisies et le déposant dans la mémoire (1) ou le communiquant à l'unité de transmission de données (12), **caractérisé en ce que** une unité d'évaluation de données (10) est pourvue qui lit le protocole d'utilisation de la mémoire électronique (1) et/ou le reçoit de l'unité de transmission de données (12) et fixe une rémunération d'utilisation.

2. Chariot de manutention selon la revendication 1, **caractérisé en ce que** le dispositif de saisie de données d'utilisation comprend un capteur de vitesse (4) pour mesurer la vitesse, et/ou un capteur d'accélération (5) pour mesurer l'accélération du chariot de manutention.

3. Chariot de manutention selon la revendication 1 ou 2, **caractérisé en ce que** les données d'utilisation contiennent la distance parcourue par le chariot de manutention.

4. Chariot de manutention selon l'une quelconque des revendications 1 à 3, **caractérisé en ce que** le dispositif de saisie de données d'utilisation comprend un capteur de charge (6) pour déterminer le poids d'une charge.

5. Chariot de manutention selon l'une quelconque des revendications 1 à 4, **caractérisé en ce que** le dispositif de saisie de données d'utilisation comprend un dispositif pour mesurer la hauteur de levage d'une charge.

6. Chariot de manutention selon l'une quelconque des revendications 1 à 5, **caractérisé en ce que** le dispositif de saisie de données d'utilisation comprend un dispositif pour mesurer au moins un paramètre caractéristique du système hydraulique du chariot de manutention.

7. Chariot de manutention selon l'une quelconque des revendications 1 à 6, **caractérisé en ce que** le dispositif de saisie de données d'utilisation comprend un capteur dans le siège du conducteur, pour reconnaître la présence d'un conducteur.

8. Chariot de manutention selon l'une quelconque des revendications 1 à 7, **caractérisé en ce que** le dispositif de saisie de données d'utilisation est relié à la commande du véhicule, afin de saisir des données de commande.

9. Chariot de manutention selon l'une quelconque des revendications 1 à 8, **caractérisé en ce que** le dispositif de saisie de données d'utilisation comprend une unité d'émission et de réception (8) pour lire des transpondeurs RFID.

10. Chariot de manutention selon l'une quelconque des revendications 1 à 9, **caractérisé en ce que** le protocole d'utilisation contient une version consolidée des données d'utilisation.

11. Chariot de manutention selon la revendication 1, **caractérisé en ce que** l'unité d'évaluation de données (10) fixe la date d'échéance de travaux de maintenance.

12. Chariot de manutention selon l'une quelconque des revendications 1 à 11, **caractérisé en ce que** le dispositif de saisie de données d'utilisation saisit des données d'un chargement et/ou porteur de charge ramassé.

13. Chariot de manutention selon la revendication 12, **caractérisé en ce que** le dispositif de saisie de données d'utilisation saisit au moins une des informations suivantes: propriétaire, destinataire, possesseur et producteur de la marchandise.

14. Chariot de manutention selon la revendication 12 ou 13, **caractérisé en ce que** le dispositif de saisie de données d'utilisation saisit les données de mouvement d'un chargement et/ou porteur de charge.
